# EUROPÄISCHE PATENTSCHRIFT

(11) **EP 0 332 213 B1**
(45) Veröffentlichungstag und Bekanntmachung des Hinweises auf die Patenterteilung: **10.02.1993**
(21) Anmeldenummer: 89104305.1
(22) Anmeldetag: 10.03.1989
(51) Int. Cl.: G01G 21/24, G01G 21/23

(54) **Plattformwaage**
Platform balance
Balance du type plate-forme

(30) Priorität: 11.03.1988 DE 3808232
(43) Veröffentlichungstag der Anmeldung: 13.09.1989
(73) Patentinhaber: Mettler-Toledo (Albstadt) GmbH, 72458 Albstadt (DE)
(72) Erfinder: Backu, Konrad, D-7470 Albstadt 1 Ebingen (DE)
(74) Vertreter: Patentanwälte Leinweber & Zimmermann

(56) Entgegenhaltungen:
- EP-A- 0 035 579
- EP-A- 0 071 652
- DE-A- 3 243 350
- US-A- 3 658 143

## Beschreibung

Die Erfindung bezieht sich auf eine Plattformwaage mit einer Lastplatte zur Aufnahme des Wägegutes, einem Kraftsensor zur Erzeugung eines dem Gewicht des Wägegutes entsprechenden Meßwertes und einer an einem in seiner zur Ebene der Lastplatte parallelen Rahmenebene rechteckigen Grundrahmen abgestützten Hebelanordnung, auf der eingangsseitig die Lastplatte zur Übertragung der dem Gewicht des Wägegutes entsprechenden Kraft vertikal abgestützt ist und die ausgangsseitig über eine Kraftübertragungsarmanordnung an den Kraftsensor angekoppelt ist.

Bei derartigen Plattformwaagen, die üblicherweise zwei einander gegenüberstehende Kraftübertragungsarme aufweisen, von denen der eine im wesentlichen die Kraft von der einen Hälfte der Lastplatte und der andere im wesentlichen die Kraft von der anderen Hälfte der Lastplatte überträgt und die an ihren einander gegenüberstehenden freien Enden miteinander und gemeinsam an den Kraftsensor gekoppelt sind, weist die Hebelanordnung einen komplizierten Aufbau auf. Da die Hebelanordnung einerseits der Untersetzung der Kraft bis zum Kraftsensor und andererseits der Führung der Lastplatte dient, weisen die bekannten Plattformwaagen Schneiden und Pfannen zur Lagerung und Begrenzung von einzelnen Teilen und gegebenenfalls Sicherungen gegen ein Aushängen der Pfannen auf. Dieser Aufbau erfordert nicht nur eine hohe Montagearbeit, sondern auch einen sehr maßgenauen Abgleich, was einen verhältnismäßig hohen Justierungsaufwand der Plattformwaage bedeutet.

Eine bekannte Waage der eingangs genannten Art (DE-OS 35 14 340) ist demgegenüber bereits dadurch verbessert, daß die beiden Kraftübertragungsarme mittels Biegelagern an dem Grundrahmen angelenkt sind. Diese Biegelager bestehen aus einem zwischen Spannpratzen eingespannten Federstahlband, womit ebenfalls ein gewisser Herstellungs- und Montageaufwand verbunden ist. Auch ist bei dieser bekannten Plattformwaage ein stabiler Zwischenträger erforderlich, auf dem die Lastplatte vertikal abgestützt und der mittels elastischer Zugkoppeln an den Kraftübertragungsarmen aufgehängt ist. Zur seitlichen Führung dieses Zwischenträgers wird außerdem ein sich horizontal erstreckender Lenker benötigt.

Der Erfindung liegt die Aufgabe zugrunde, eine Plattformwaage der eingangs genannten Art dahingehend auszubilden, daß die Anzahl der erforderlichen Einzelteile verringert sowie der Aufwand für Montage und Justierung herabgesetzt ist.

Erfindungsgemäß wird diese Aufgabe dadurch gelöst, daß die Hebelanordnung vier jeweils im Bereich der Ecken des Grundrahmens an zwei einander gegenüberliegenden Rahmenseiten angeordnete einstückige Kraftübertragungsglieder aufweist, in denen jeweils ein an der betreffenden Rahmenseite des Grundrahmens fest angeordnetes Verankerungsteil und ein in einem horizontalen Abstand vom Verankerungsteil sich erstreckendes, die Lastplatte abstützendes Lastaufnahmeteil, das mittels zwei sich in einem vertikalen Abstand zueinander erstreckende, durch auf den Eckpunkten eines Parallelogramms gelegene Schwachstellen des einstückigen Kraftübertragungsgliedes mit dem Verankerungsteil und dem Lastaufnahmeteil verbundene Lenker parallel geführt ist, vorgesehen ist, und in dessen zwischen dem Verankerungsteil, dem Lastaufnahmeteil sowie den Lenkern begrenzten freien Innenraum ein durch je eine weitere Schwachstelle einerseits mit dem Verankerungsteil und andererseits mit dem Lastaufnahmeteil verbundenes Hebelglied angeordnet ist, daß jeweils die Hebelglieder der beiden an derselben Rahmenseite angeordneten Kraftübertragungsglieder durch ein sich längs dieser Rahmenseite erstreckendes Verbindungsglied drehfest miteinander gekoppelt sind und daß sich von jedem der beiden Verbindungsglieder aus ein damit fest verbundener Kraftübertragungsarm zum Kraftsensor hin erstreckt.

Somit werden bei der Erfindung zur Kraftübertragung von der Lastplatte auf die beiden zum Kraftsensor führenden Kraftübertragungsarme als einzige Bauteile nur die vier identischen einstückigen Kraftübertragungsglieder benötigt, die sowohl in der Herstellung als auch der Montage einfach sind. Die durch die Lastplatte auf das mittels der Lenker vertikal parallel geführte Lastaufnahmeteil ausgeübte Kraftkomponente bewirkt somit eine der Elastizität der Schwachstellen der Lenker entsprechende elastische Vertikalauslenkung des Lastaufnahmeteils nach unten. Diese Verschiebung zwischen dem Lastaufnahmeteil und dem Verankerungsteil führt zu einer vertikalen Absenkung der das Hebelglied mit dem Lastaufnahmeteil verbindenden Schwachstelle, wodurch eine Drehung dieses Hebelgliedes um seine das Hebelglied mit dem feststehenden Verankerungsteil verbindende Schwachstelle als Hebeldrehpunkt erfolgt. Das zwischen dem Kraftübertragungsarm und dem Hebelglied bestehende Übersetzungsverhältnis ist also durch den Abstand zwischen den beiden die Aufhängung des Hebelglieds in dem einstückigen Kraftübertragungsglied bewirkenden weiteren Schwachstellen und durch die Länge des Kraftübertragungsarms, bezogen auf den Hebeldrehpunkt, genau bestimmt. Auch bedarf es bei der erfindungsgemäßen Ausbildung der Plattformwaage keines Zwischenträgers, da die Lastplatte unmittelbar auf den vier Lastaufnahmeteilen abgestützt werden kann. Bei der durch die von der Lastplatte ausgeübte Kraft bewirkten Drehung der Hebelglieder ist nur die senkrechte Kraftkomponente, die auf das jeweilige Lastaufnahmeteil einwirkt, wirksam, weil die Querkomponenten von den Lenkern aufgenommen werden und daher keine Momente ausüben. Bei der Erfindung stützt sich also die Lastplatte im Bereich ihrer vier Ecken auf je einem der Kraftübertragungsglieder ab, die paarweise durch das Verbindungsglied starr miteinander gekoppelt sind und somit das gemeinsame Drehmoment ihrer Hebelglieder auf den jeweiligen Kraftübertragungsarm übergeben. Diese Plattformwaage zeichnet sich somit durch sehr wenig Einzelteile aus und stellt einen sehr robusten Aufbau dar.

In einer bevorzugten Ausführungsform der erfindungsgemäßen Plattformwaage ist vorgesehen, daß sich an den das Hebelglied mit dem Verankerungsteil und dem Lastaufnahmeteil verbindenden weiteren Schwachstellen die Schwächungsrichtung des Materials der Kraftübertragungsglieder horizontal erstreckt. Durch diese Ausbildung wirken die weiteren Schwachstellen ähnlich wie durch vertikale Blattfedern mit senkrecht zur Drehebene des Hebelgliedes gerichteter Blattebene gebildete Biegeglieder, so daß die weiteren Schwachstellen vertikal starr und nur horizontal elastisch sind.

In einer weiteren Ausgestaltung der erfindungsgemäßen Plattformwaage ist vorgesehen, daß das Kraftübertragungsglied einen sich vom Lastaufnahmeteil aus mit seinem freien Ende bis in einen Abstand zum Verankerungsteil erstreckenden Lastaufnahmearm aufweist, auf dem die Lastplatte abgestützt ist. Durch diese Ausbildung, bei der sich der Lastaufnahmearm vom Lastaufnahmeteil aus einstückig parallel zu den Lenkern in Richtung des Verankerungsteils erstreckt, ist es also möglich, die Lage des Punktes der vertikalen Krafteinleitung von der Lastplatte zum Lastaufnahmeteil in bezug auf die Lage des durch die weitere Schwachstelle bestimmten Hebeldrehpunktes des Hebelgliedes genau auf das gewünschte Verhältnis einstellen.

Gemäß einem weiteren Gedanken der Erfindung weist das Verankerungsteil oder/und das Lastaufnahmeteil einen sich über den größten Teil seiner horizontalen Ausdehnung erstreckenden Schlitz sowie eine Justiereinrichtung zur Einstellung der vertikalen Breite des Schlitzes auf. Durch die Veränderung der Breite dieses Schlitzes läßt sich die Lage der die Eckpunkte des Parallelogramms bestimmenden Schwachstellen verändern, wodurch in Abhängigkeit von der übertragenen Meßkraft ein zusätzliches Moment auf das Kraftübertragungsglied ausgeübt wird. Damit wird dieselbe Wirkung erreicht wie die einer Änderung des Übersetzungsverhältnisses, also einer Änderung des geometrischen Abstands zwischen den weiteren Schwachstellen. Fertigungstoleranzen, die dieses Übersetzungsverhältnis beeinflussen, können somit durch die Justiereinrichtung ausgeglichen werden.

In diesem Zusammenhang ist zweckmäßig vorgesehen, daß der Schlitz in dem Lastaufnahmeteil ausgehend vom freien Innenraum nahe der Schwachstelle des vertikal oberen Lenkers angeordnet ist. Bei abgenommener Lastplatte ist damit der Schlitz für Justierungsarbeiten leicht zugänglich.

Einer besonderen baulichen Einfachheit und leichten Zugänglichkeit dient in einer weiteren Ausführungsform der Erfindung die Maßnahme, daß die Justiereinrichtung einen mit seinem Kopf auf der einen Seite des Schlitz es abgestützten und in ein Gewinde auf der anderen Seite des Schlitzes eingeschraubten Schraubbolzen und einen in ein Gewinde auf der einen Seite des Schlitzes eingeschraubten und gegen die andere Seite des Schlitzes abgestützten Konterschraubbolzen aufweist.

Es liegt auch im Rahmen der Erfindung, daß in jedes Verankerungsteil von seiner Unterseite her ein Fußteil zur Abstützung der Plattformwaage auf einer Unterlage eingeschraubt ist. Durch diese Ausbildung dient das mit dem Grundrahmen fest verbundene Kraftübertragungsglied gleichzeitig zur Abstützung der Plattformwaage auf einer Unterlage, so daß die Höhe des Kraftübertragungsgliedes über der Unterlage genau eingestellt werden kann. Insbesondere ist eine Höhenanpassung möglich, sofern die Einschraubhöhe des Fußteils in das Verankerungsteil eingestellt wird.

Einer einfachen Montage der Plattformwaage dient auch die Maßnahme, daß jedes Verankerungsteil zwei in einem gegenseitigen vertikalen Abstand angeordnete Gewindebohrungen aufweist, durch die es mit zwei den Grundrahmen durchsetzenden Schraubbolzen an diesem befestigt ist.

Schließlich erweist sich im Sinne eines einfachen Aufbaus die Maßnahme als besonders zweckmäßig, daß das Verbindungsglied durch ein in einer formschlüssigen Bohrung des jeweiligen Hebelgliedes festgelegtes Rohr gebildet ist. Beispielsweise kann diese Festlegung des Verbindungsgliedes gegenüber dem jeweiligen Hebelglied durch einfaches Einschweißen oder Einkleben erfolgen.

Weitere Merkmale, Einzelheiten und Vorteile der Erfindung ergeben sich aus der folgenden Beschreibung und der Zeichnung, auf die bezüglich einer erfindungswesentlichen Offenbarung aller im Text nicht erwähnten Einzelheiten ausdrücklich hingewiesen wird. Hierin zeigen:
- Fig. 1: einen Vertikalschnitt durch eine Plattformwaage längs der Linie I-I von Fig. 2,
- Fig. 2: eine Aufsicht auf die Plattformwaage von Fig. 1 von oben bei abgenommener Lastplatte, und
- Fig. 3: eine vergrößerte Einzelansicht aus Fig. 1 zur Darstellung eines einstückigen Kraftübertragungsgliedes.

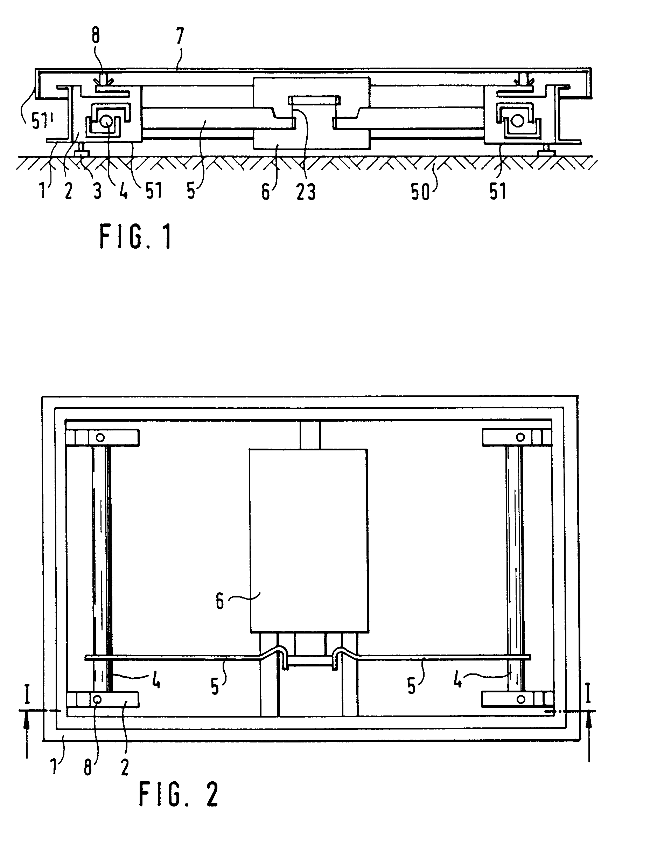

Wie aus Fig. 1 und 2 hervorgeht, weist eine Plattformwaage einen rechteckigen Grundrahmen 1 auf, der in einem durch Fußteile 3 bestimmten Abstand mit horizontal ausgerichteter Rechteckebene über einer Unterlage 50 angeordnet ist. An der Innenseite der beiden kürzeren Rechteckseiten des Grundrahmens 1 ist im Bereich der Rahmenecken jeweils ein einstückiges Kraftübertragungsglied 2 fest angeordnet. Eine der Form des Grundrahmens entsprechend rechteckige, ebene Lastplatte 7 deren rechtwinklig nach unten abgebogener Rand 51′ den Grundrahmen 1 seitlich außen in einem geringen Abstand übergreift, ist mittels vier sich von der Unterseite der Lastplatte 7 aus vertikal nach unten erstreckenden Laststützen 8 auf der Oberseite jedes der vier Kraftübertragungsglieder 2 abgestützt.

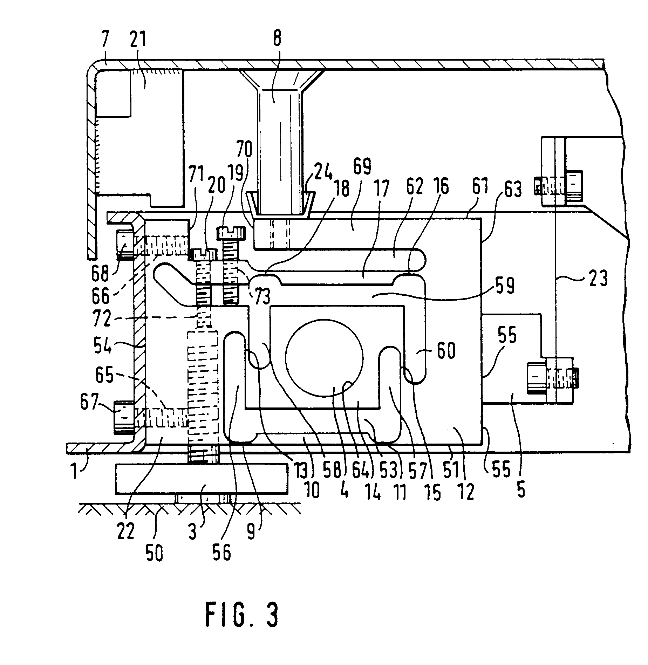

Wie anhand von Fig. 3 noch im einzelnen beschrieben wird, sind die Kraftübertragungsglieder 2 Bestandteil einer Hebelanordnung, durch die infolge der mit einem Wägegut belasteten Lastplatte 7 auf das Kraftübertragungsglied 2 ausgeübten Kraft ein Drehmoment an einem jeweils das Paar der an der kürzeren Seitenkante angeordneten Kraftübertragungsglieder 2 miteinander verbindenden Verbindungsglied 4 hervorgerufen wird. Die Hebelanordnung weist ferner zwei sich längs der längeren Seitenkanten des Grundrahmens 1 erstreckende Kraftübertragungsarme 5 auf, die jeweils an ihrem einen Ende mit dem Verbindungsglied 4 starr verbunden und sich mit ihren dazu entgegengesetzten freien Enden in Gegenüberstellung zueinander bis zu einer in der Mitte der längeren Rechteckabmessung angeordneten Koppeleinrichtung 23 erstrecken, durch die sie untereinander und mit einem Kraftsensor 6 gekoppelt sind.

Durch die symmetrische Anordnung der Kraftübertragungsglieder 2, Verbindungsglieder 4 und Kraftübertragungsarme 5 wird das Drehmoment im wesentlichen über den in Fig. 1 und 2 linken Kraftübertragungsarm 5 auf den Kraftsensor 6 übertragen, wenn das Wägegut auf der linken Seite der Lastplatte 7 aufgebracht wird. Wird dagegen das Wägegut auf der Lastplatte 7 rechts aufgebracht, so überträgt der rechte Kraftübertragungsarm 5 das wesentliche Drehmoment. Bei Aufbringung des Wägegutes in der Mitte sind beide Kraftübertragungsarme 5 etwa hälftig an der Drehmomentübertragung beteiligt.

Wie insbesondere aus Fig. 3 hervorgeht, ist das Kraftübertragungsglied 2 aus einer einstückigen, ebenen, rechteckigen Platte herausgearbeitet. Nahe der sich im unbelasteten Zustand horizontal und parallel zur Lastplatte 7 erstreckenden Unterkante 51 des Kraftübertragungsgliedes 2 erstreckt sich ein erster horizontaler Schlitz 53 bis in einem Abstand zu der in Fig. 3 linken Außenkante 54 und rechten Außenkante 55 des Kraftübertragungsgliedes 2. An seinen Enden setzt sich der erste horizontale Schlitz 53 jeweils in einem zur linken Außenkante 54 und rechten Außenkante 55 parallelen ersten linken vertikalen Schlitz 56 und ersten rechten vertikalen Schlitz 57 fort, so daß hierdurch in die rechteckige Materialplatte insgesamt eine U-förmige Grundform eingearbeitet ist, wobei sich der durch den ersten linken vertikalen Schlitz 56 gebildete linke U-Schenkel bis etwa zur Mitte der Höhe des Kraftübertragungsgliedes 2 erstreckt, während der durch den den U-Steg bildenden ersten horizontalen Schlitz 53 mit dem linken U-Schenkel verbundene und durch den ersten rechten vertikalen Schlitz 57 gebildete rechte U-Schenkel eine etwas kleinere vertikale Höhe aufweist als der linke U-Schenkel.

Eine der durch den ersten linken vertikalen Schlitz 56, den ersten horizontalen Schlitz 53 und den ersten rechten vertikalen Schlitz 57 gebildeten U-förmigen Grundform entsprechende, jedoch mit den freien Enden ihrer U-Schenkel nach unten weisende weitere U-förmige Grundform ist durch einen zweiten linken vertikalen Schlitz 58, einen sich davon ausgehend nach rechts erstreckenden zweiten horizontalen Schlitz 59 und einen sich vom rechten Ende des zweiten horizontalen Schlitzes 59 aus vertikal nach unten erstreckenden zweiten rechten vertikalen Schlitz 60 gebildet. Zwischen der zur Unterkante 51 parallelen Oberkante 61 des Kraftübertragungsgliedes 2 und dem zweiten horizontalen Schlitz 59 erstreckt sich parallel zu letzterem ein weiterer horizontaler Schlitz 62, wobei die zwischen dem weiteren horizontalen Schlitz 62 und dem zweiten horizontalen Schlitz 59 stehenbleibende Materialstärke des Kraftübertragungsgliedes 2 der zwischen der Unterkante 51 und dem ersten horizontalen Schlitz 53 stehenbleibenden Materialstärke entspricht. Dadurch sind zwischen der Unterkante 51 und dem ersten horizontalen Schlitz 53 einerseits und zwischen dem zweiten horizontalen Schlitz 59 und dem weiteren horizontalen Schlitz 62 zwei zueinander parallele Lenker 10,17 begrenzt, deren Enden auf den Eckpunkten eines Parallelogramms liegen. Diese Enden sind als Schwachstellen 9, 11,16 und 18 ausgebildet, indem dort der erste horizontale Schlitz 53 bzw. der zweite horizontale Schlitz 59 zur Unterkante 51 hin bzw. zum weiteren horizontalen Schlitz 62 hin mit gerundeten Übergängen derart weiter ausgenommen sind, daß die Materialstärke zur Unterkante 51 bzw. zum weiteren horizontalen Schlitz 62 hin blattfederartig verdünnt ist.

Die Lenker 10,17 sind an ihren in Fig. 3 linken Enden über die Schwachstellen 9,18 mit einem sich vertikal erstreckenden Verankerungsteil 22 verbunden, das einerseits durch die linke Außenkante 54 des Kraftübertragungsgliedes 2 und andererseits durch den jeweils linken Rand des ersten linken vertikalen Schlitzes 56 und des zweiten linken vertikalen Schlitzes 58 begrenzt ist. An ihren rechten Enden stehen die Lenker 10,17 über die Schwachstellen 11,16 mit einem durch die zur linken Außenkante 54 parallele rechte Außenkante 63 und durch die jeweils rechten Ränder des ersten rechten vertikalen Schlitzes 57 und des zweiten rechten vertikalen Schlitzes 60 begrenzten Lastaufnahmeteil 12 in Verbindung, so daß letzteres durch die Lenker 10,17 in vertikaler Richtung parallel geführt ist.

Der zweite linke vertikale Schlitz 58 verläuft mit seinem linken Rand über eine bestimmte Länge nahe dem rechten Rand des ersten linken vertikalen Schlitzes 56, während der erste rechte vertikale Schlitz 57 in gleicher Weise mit seinem rechten Rand über die bestimmte Länge längs des linken Randes des zweiten rechten vertikalen Schlitzes 60 verläuft, so daß einerseits zwischen dem ersten linken vertikalen Schlitz 56 und dem zweiten linken vertikalen Schlitz 58 und andererseits zwischen dem ersten rechten vertikalen Schlitz 57 und dem zweiten rechten vertikalen Schlitz 60 je eine weitere Schwachstelle 13 bzw. 15 begrenzt ist. Diese weiteren Schwachstellen 13,15 wirken also wie mit ihrer Federebene vertikal angeordnete Federzungen, die sich zwischen den gerundeten Enden der einander überlappenden U-Schenkel der sich von unten nach oben öffnenden U-förmigen Grundform und der sich von oben nach unten öffnenden weiteren U-förmigen Grundform erstrecken. Durch diese weiteren Schwachstellen 13,16 ist somit in dem Kraftübertragungsglied 2 ein zwischen den U-Stegen und den U-Schenkeln der beiden U-förmigen Grundformen begrenztes Hebelglied 14 aufgehängt, das durch die weitere Schwachstelle 13 mit dem Verankerungsteil 22 und durch die weitere Schwachstelle 15 mit dem Lastaufnahmeteil 12 zusammenhängt.

Das bereits anhand von Fig. 1 und 2 erläuterte Verbindungsglied 4 ist in der Form eines Rohres ausgebildet und in eine zentrale Bohrung 64 des Hebelgliedes 14 eingeschweißt.

Zwei sich von der linken Außenkante 54 her in das Verankerungsteil 22 hinein erstreckende Gewindebohrungen 65,66 dienen der Befestigung des Verankerungsteils 22 an der Innenseite des Grundrahmens 1 mittels zwei sich durch den Grundrahmen 1 hindurch erstreckenden Schraubbolzen 67, 68. Eine von der Unterkante 51 her in dem Verankerungsteil 22 ausgebildete Gewindebohrung dient zur Aufnahme des schraubbaren Fußteils 3, das somit als Stellfuß zur Höheneinstellung über der Unterlage 50 dient.

Der zweite horizontale Schlitz 59 ist über den zweiten linken vertikalen Schlitz 58 hinaus in das Verankerungsteil 22 hinein verlängert, wo er sich bis über die Mitte der horizontalen Ausdehnung des Verankerungsteiles 22 hinaus horizontal und von dort aus schräg nach oben abgewinkelt bis nahe zu der linken Außenkante 54 erstreckt. Ein zwischen der Oberkante 61 des Kraftübertragungsgliedes 2 und dem weiteren horizontalen Schlitz 62 begrenzter Lastaufnahmearm 69 des Lastaufnahmeteils 12 erstreckt sich mit seinem freien Ende 70 bis zur Schwachstelle 18, wobei das Verankerungsteil 22 in Gegenüberstellung zum freien Ende 70 eine L-förmige Ausnehmung 71 aufweist, deren horizontaler L-Schenkel in einer bestimmten Materialstärke über der horizontalen Fortsetzung des zweiten horizontalen Schlitzes 59 liegt. Auf diesem horizontalen L-Schenkel der L-förmigen Ausnehmung 71 stützt sich der Kopf eines Schraubbolzens 20 ab, der die horizontale Erweiterung des zweiten horizontalen Schlitzes 59 durchsetzend in ein Gewinde 72 des Verankerungsteils 22 auf der dem Kopf des Schraubbolzens 20 abgewandten Seite des Schlitzes eingeschraubt ist. Ein dazu paralleler Konterschraubbolzen 19 ist in ein Gewinde 73 der zwischen dem L-Schenkel der L-förmigen Ausnehmung 71 und der horizontalen Erweiterung des zweiten horizontalen Schlitzes 59 begrenzten Materialstärke eingeschraubt und stützt sich mit seinem Ende auf der entgegengesetzten Seite dieses Schlitzes am Verankerungsteil 22 ab. Hierdurch ist eine Justiereinrichtung gebildet, durch die sich das von den Schwachstellen 9 11, 16 und 18 aufgespannte Parallelogramm verstellen läßt.

Die bereits anhand von Fig. 1 und 2 erläuterte Laststütze 8 ist zur Schockdämpfung aus einem elastisch nachgiebigen Material hergestellt und auf dem Lastaufnahmearm 69 nahe seines freien Endes 70 in einem Aufnahmeteil 24 mit trichterartig hochgebogenem Rand abgestützt. Ein von der Unterseite der Lastplatte 7 nach unten vorstehender Anschlag 21 steht bei unbelasteter Lastplatte 7 der Oberkante des Kraftübertragungsgliedes 2 jenseits der L-förmigen Ausnehmung 71 in einem gewissen Abstand gegenüber und kommt auf der Oberkante 61 in Anlage, wenn eine Überlast aufgelegt wird. Dadurch ist das Kraftübertragungsglied 2 vor Überlastung geschützt.

Durch diesen Aufbau der Plattformwaage ergibt sich die folgende Wirkungsweise: Wenn auf die Lastplatte 7 ein Wägegut aufgebracht wird, so erfolgt eine Übertragung der durch das Gewicht des Wägegutes hervorgerufenen Kraft über die vier Laststützen 8 auf den Lastaufnahmearm 69 des Lastaufnahmeteils 12. Die dadurch hervorgerufene Vertikalbewegung des durch die Lenker 10,17 parallel geführten Lastaufnahmeteils 12 verursacht eine Drehung des Hebelgliedes 14 um die in Fig. 3 linke weitere Schwachstelle 13 als Hebeldrehpunkt. Wirksam ist dabei nur die senkrechte Kraftkomponente, die auf das Hebelglied 14 wirkt, da die Querkomponenten über die Lenker 10,17 aufgenommen werden und somit keine Momente ausüben. Durch die Wahl der Kraftübertragungsarme 5 kann das Übersetzungsverhältnis zwischen der Summe der von der Lastplatte 7 über die Laststützen 8 ausgeübten Kräfte und der über die Koppeleinrichtung 23 auf den Kraftsensor 6 ausgeübten Kraft einfach bestimmt werden, so daß die von dem Kraftsensor 6 gemessene, über die Koppeleinrichtung 23 übertragene Kraft ein direktes Maß für die durch das Wägegut auf die Lastplatte 7 ausgeübte Last ist.

Da die durch den Abstand zwischen den weiteren Schwachstellen 13,15 und durch die Länge des Kraftübertragungsarmes 5 bestimmte Übersetzung der Waage ein sehr genau und zeitlich konstant bleibendes Maß sein muß, jedoch produktionsmäßig mit Fertigungstoleranzen zu rechnen ist, ist die Justiereinrichtung 19,20 vorgesehen, die die Höhe des Parallelogramms, d. h. das senkrechte Maß zwischen der Schwachstelle 18 und der Schwachstelle 9, zu verändern gestattet. Durch diese Verstellung des Parallelogramms ergibt sich an dem Hebelglied 14 in Abhängigkeit von der übertragenen Meßkraft ein zusätzliches Moment, das von der Verstellung abhängig ist. Damit wird dieselbe Wirkung erhalten, als ob das Übersetzungsverhältnis, also der geometrische Abstand zwischen den weiteren Schwachstellen 13,15, verändert worden wäre.

Die vorstehende Beschreibung macht also deutlich, daß durch die Verwendung der einstückigen Kraftübertragungsglieder 2 Plattformwaagen mit beliebigen Abmessungen, die außerdem für hohe Lasten geeignet sind, aufgebaut werden können. Variationen in den Plattformabmessungen erfordern lediglich Variationen in den geometrischen Längen der wenigen Verbindungsteile. Außerdem können Plattformen verwendet werden, die vom Kraftsensor unabhängig sind.

## Patentansprüche

1. Plattformwaage mit einer Lastplatte zur Aufnahme des Wägegutes, einem Kraftsensor zur Erzeugung eines dem Gewicht des Wägegutes entsprechenden Meßwertes und einer an einem in seiner zur Ebene der Lastplatte parallelen Rahmenebene rechteckigen Grundrahmen abgestützten Hebelanordnung, auf der eingangsseitig die Lastplatte zur Übertragung der dem Gewicht des Wägegutes entsprechenden Kraft vertikal abgestützt ist und die ausgangsseitig über eine Kraftübertragungsarmanordnung an den Kraftsensor angekoppelt ist, **dadurch gekennzeichnet,** daß die Hebelanordnung vier jeweils im Bereich der Ecken des Grundrahmens (1) an zwei einander gegenüberliegenden Rahmenseiten angeordnete einstückige Kraftübertragungsglieder (2) aufweist, in denen jeweils ein an der betreffenden Rahmenseite des Grundrahmens (1) fest angeordnetes Verankerungsteil (22) und ein in einem horizontalen Abstand vom Verankerungsteil (22) sich erstreckendes, die Lastplatte (7) abstützendes Lastaufnahmeteil (12), das mittels zwei sich in einem vertikalen Abstand zueinander erstreckende, durch auf den Eckpunkten eines Parallelogramms gelegene Schwachstellen (9,11,16,18) des einstückigen Kraftübertragungsgliedes (2) mit dem Verankerungsteil (22) und dem Lastaufnahmeteil (12) verbundene Lenker (10,17) parallel geführt ist, vorgesehen ist, und in dessen zwischen dem Verankerungsteil (22), dem Lastaufnahmeteil (12) sowie den Lenkern (10,17) begrenzten freien Innenraum ein durch je eine weitere Schwachstelle (13,15) einerseits mit dem Verankerungsteil (22) und andererseits mit dem Lastaufnahmeteil (12) verbundenes Hebelglied (14) angeordnet ist, daß jeweils die Hebelglieder (14) der beiden an derselben Rahmenseite angeordneten Kraftübertragungsglieder (2) durch ein sich längs dieser Rahmenseite erstreckendes Verbindungsglied (4) drehfest miteinander gekoppelt sind und daß sich von jedem der beiden Verbindungsglieder (4) aus ein damit fest verbundener Kraftübertragungsarm (5) zum Kraftsensor (6) hin erstreckt.

2. Plattformwaage nach Anspruch 1, dadurch gekennzeichnet, daß das Verbindungsglied (4) durch ein in einer formschlüssigen Bohrung (64) des jeweiligen Hebelgliedes (14) festgelegtes Rohr gebildet ist.

3. Plattformwaage nach Anspruch 1 oder 2, dadurch gekennzeichnet, daß sich an den das Hebelglied (14) mit dem Verankerungsteil (22) und dem Lastaufnahmeteil (12) verbindenden weiteren Schwachstellen (13,15) die Schwächungsrichtung des Materials der Kraftübertragungsglieder (2) horizontal erstreckt.

4. Plattformwaage nach einem der Ansprüche 1 bis 3, dadurch gekennzeichnet, daß jedes Kraftübertragungsglied (2) einen sich vom Lastaufnahmeteil (12) aus mit seinem freien Ende (70) bis in einen Abstand zum Verankerungsteil (22) erstreckenden Lastaufnahmearm (69) aufweist, auf dem die Lastplatte (7) abgestützt ist.

5. Plattformwaage nach einem der Ansprüche 1 bis 4, dadurch gekennzeichnet, daß das Verankerungsteil (22) oder/und das Lastaufnahmeteil (12) einen sich über den größten Teil seiner horizontalen Ausdehnung erstreckenden Schlitz (59) sowie eine Justiereinrichtung (19,20) zur Einstellung der vertikalen Breite des Schlitzes (59) aufweist.

6. Plattformwaage nach Anspruch 5, dadurch gekennzeichnet, daß der Schlitz (59) in dem Lastaufnahmeteil (22) ausgehend vom freien Innenraum nahe der Schwachstelle (18) des vertikal oberen Lenkers (17) angeordnet ist.

7. Plattformwaage nach Anspruch 5 oder 6, dadurch gekennzeichnet, daß die Justiereinrichtung einen mit seinem Kopf auf der einen Seite des Schlitzes (59) abgestützten und in ein Gewinde (72) auf der anderen Seite des Schlitzes (59) eingeschraubten Schraubbolzen (20) und einen in ein Gewinde (73) auf der einen Seite des Schlitzes (59) eingeschraubten und gegen die andere Seite des Schlitzes (59) abgestützten Konterschraubbolzen (19) aufweist.

8. Plattformwaage nach einem der Ansprüche 1 bis 7, dadurch gekennzeichnet, daß in jedes Verankerungsteil (22) von seiner Unterseite her ein Fußteil (3) zur Abstützung der Plattformwaage auf einer Unterlage (50) eingeschraubt ist.

9. Plattformwaage nach einem der Ansprüche 1 bis 8, dadurch gekennzeichnet, daß jedes Verankerungsteil (22) zwei in einem gegenseitigen vertikalen Abstand angeordnete Gewindebohrungen (65,66) aufweist, durch die es mit zwei den Grundrahmen (1) durchsetzenden Schraubbolzen (67,68) an diesem befestigt ist.

## Claims

1. Platform balance with a load plate for receiving the goods to be weighed, with a force sensor for generating a measured value corresponding to the weight of the goods to be weighed and with a lever arrangement which is supported on a base frame rectangular in its frame plane parallel to the plane of the load plate and on which, on the input side, the load plate is supported vertically for transmitting the force corresponding to the weight of the goods to be weighed and which, on the output side, is coupled to the force sensor via a force transmission arm arrangement, characterised in that the lever arrangement has four one-piece force transmission members (2) which are arranged respectively in the region of the corners of the base frame (1) on two mutually opposite frame sides and provided in each of which there are an anchoring part (22), arranged fixedly on the respective frame side of the base frame (1), and a load-receiving part (12) which extends at a horizontal distance from the anchoring part (22), supports the load plate (7) and is guided in parallel by means of two links (10, 17), extending at a vertical distance from one another and connected to the anchoring part (22) and to the load-receiving part (12) by weak points (9, 11, 16, 18) of the one-piece force transmission member (2) located at the corner points of a parallelogram, and in the free inner space of which, limited between the anchoring part (22), the load-receiving part (12) and also the links (10, 17), is arranged a lever member (14) connected on the one hand to the anchoring part (22) and on the other hand to the load-receiving part (12) by means of a further respective weak point (13, 15), in that the respective lever members (14) of the two force transmission members (2) arranged on the same frame side are coupled fixedly in terms of rotation to one another by means of a connecting member (4) extending along this frame side, and in that there extends towards the force sensor (6) from each of the two connecting members (4) a force transmission arm (5) connected fixedly to the latter.

2. Platform balance according to claim 1, characterised in that the connecting member (4) is formed by a tube secured in a positively locking bore (64) of the respective lever member (14).

3. Platform balance according to claim 1 or 2, characterised in that at the further weak points (13, 15) connecting the lever member (14) to the anchoring part (22) and to the load-receiving part (12), the direction of weakening of the material of the force transmission members (2) extends horizontally.

4. Platform balance according to one of the claims 1 to 3, characterised in that each force transmission member (2) has a load-receiving arm (69) which extends with its free end (70) from the load-receiving part (12) to a distance from the anchoring part (22) and on which the load plate (7) is supported.

5. Platform balance according to one of the claims 1 to 4, characterised in that the anchoring part (22) and/or the load-receiving part (12) have a slot (59) extending over most of their horizontal extension and also an adjusting device (19, 20) for setting the vertical width of the slot (59).

6. Platform balance according to claim 5, characterised in that the slot (59) in the load-receiving part (22) is arranged so as to start from the free inner space near the weak point (18) of the vertically upper link (17).

7. Platform balance according to claim 5 or 6, characterised in that the adjusting device has a screw bolt (20) supported by its head on one side of the slot (59) and screwed into a thread (72) on the other side of the slot (59) and a counter-screw bolt (19) screwed into a thread (73) on one side of the slot (59) and supported against the other side of the slot (59).

8. Platform balance according to one of the claims 1 to 7, characterised in that a foot part (3) for supporting the platform balance on a foundation (50) is screwed into each anchoring part (22) from the underside of the latter.

9. Platform balance according to one of claims 1 to 8, characterised in that each anchoring part (22) has two threaded bores (65, 66) which are arranged at a vertical distance from one another and by means of which it is fastened to the base frame (1) by two screw bolts (67, 68) passing through the latter.

## Revendications

1. Balance du type plate-forme avec un plateau de charge pour recevoir la matière à peser, un capteur de force pour obtenir une valeur mesurée correspondant au poids de la matière à peser et un arrangement de leviers prenant appui sur un cadre de base rectangulaire dans le plan de cadre parallèle au plan de la charge, arrangement de leviers sur lequel s'appuie verticalement du côté entrée le plateau de charge pour transmettre la force correspondant au poids de la matière pesée, et qui, du côté sortie, est accouplé au capteur de force par un dispositif à bras de transmission de force, caractérisée en ce que l'arrangement de leviers comporte quatre organes de transmission de force (2) d'une seule pièce disposés chacun dans la zone de l'un des angles du cadre de base (1) sur deux côtés opposés du cadre, dans chacun desquels il est prévu une pièce d'ancrage (22) disposée de façon fixe sur le côté correspondant du cadre de base (1) et un élément de réception de charge (12) supportant le plateau de charge (7) et s'étendant à une certaine distance horizontale de la pièce d'ancrage (22), qui est guidé en mouvement parallèle au moyen de deux bielles (10,17) s'étendant à une certaine distance l'une de l'autre dans le sens vertical reliées à la pièce d'ancrage (22) et à l'élément de réception de charge (12) par les points faibles (9,11,16,18) de l'organe de transmission de force (2) d'une seule pièce situés au sommet d'un parallélogramme, et dans l'espace libre duquel délimité entre la pièce d'ancrage (22), l'élément de réception de charge (12) ainsi que les bielles (10,17), est disposé un élément de levier (14) relié par un autre point faible (13,15) respectivement d'une part à la pièce d'ancrage (22) et d'autre part à l'élément de réception de charge (12), les éléments de levier (14) respectifs des deux organes de transmission de force (2) disposés sur le même côté du cadre étant calés en rotation l'un avec l'autre par un élément de liaison (4) s'étendant le long de ce côté de cadre et un bras de transmission de force (5) qui lui est relié de façon fixe s'en détachant en direction du capteur de force (6).

2. Balance du type plate-forme selon la revendication 1, caractérisée en ce que l'élément de liaison (4) est formé par un tube fixe par blocage dans un trou (64) de l'élément de levier (14) correspondant.

3. Balance du type plate-forme selon la revendication 1 ou 2, caractérisée en ce que le sens d'affaiblissement du matériau des organes de transmission de force (2) est dirigé horizontalement en passant par les points faibles (13,15) reliant la pièce d'ancrage (22) et l'élément de réception de charge (12).

4. Balance du type plate-forme selon une quelconque des revendications 1 à 3, caractérisée en ce que chaque organe de transmission de force (2) comporte un bras de réception de charge (69) s'étendant par son extrémité (70) libre de l'élément de réception de charge (12) jusqu'à une certaine distance de la pièce d'ancrage (22) et supportant le plateau de charge (7).

5. Balance du type plate-forme selon une quelconque des revendications 1 à 4, caractérisée en ce que la pièce d'ancrage (22) ou/et l'élément de réception de charge (12) comporte une fente (59) s'étendant sur la majeure partie de son extension horizontale ainsi qu'un dispositif d'ajustage (19, 20) pour le réglage de la largeur verticale de la fente (59).

6. Balance du type plate-forme selon la revendication 5, caractérisée en ce que la fente (59) est disposée dans l'élément de réception de charge (12) à partir de l'espace intérieur libre à proximité de l'emplacement faible (18) de la bielle (17) supérieure.

7. Balance du type plate-forme selon la revendication 5 ou 6, caractérisée en ce que le dispositif d'ajustage comporte un boulon fileté (20) prenant appui par sa tête sur l'un des côtés de la fente (59) et vissé dans un filet (72) prévu de l'autre côté de la fente (59), et un contre-boulon fileté (19) vissé dans un filet (73) d'un côté de la fente (59) et prenant appui contre l'autre côté de la fente (59).

8. Balance du type plate-forme selon une quelconque des revendications 1 à 7, caractérisée en ce que, dans chaque pièce d'ancrage (22), est vissé à partir de sa partie inférieure un pied (3) pour supporter la balance du type plateforme sur une surface d'appui (50).

9. Balance du type plate-forme selon une quelconque des revendications 1 à 8, caractérisée en ce que chaque pièce d'ancrage (22) présente deux trous taraudés (65,66) disposés à une certaine distance l'un de l'autre dans le sens vertical grâce auxquels elle est fixée au cadre de base (1) par deux boulons filetés (67,68) traversant ce cadre.
